Europäisches Patentamt

European Patent Office

Office européen des brevets

(19)

(11) Publication number: **0 058 720**
**B1**

(12) # EUROPEAN PATENT SPECIFICATION

(45) Date of publication of patent specification: **24.07.85**

(51) Int. Cl.⁴: **H 02 J 9/08**

(21) Application number: **81902667.5**

(22) Date of filing: **02.09.81**

(86) International application number:
**PCT/HU81/00036**

(87) International publication number:
**WO 82/00927 18.03.82 Gazette 82/08**

(54) **STAND-BY ENERGY SOURCE, IN PARTICULAR AN ELECTRICAL SUPPLY SOURCE.**

(30) Priority: **02.09.80 HU 215980**

(43) Date of publication of application:
**01.09.82 Bulletin 82/35**

(45) Publication of the grant of the patent:
**24.07.85 Bulletin 85/30**

(84) Designated Contracting States:
**FR**

(56) References cited:
EP-A-0 056 910
DD-A- 86 441
DE-A-2 401 513
FR-A-2 462 803
US-A-2 911 541
US-A-3 221 172
US-A-3 477 013

Te Int., 4, N 1, publ. 1980, G. Frattini "5 to 400
kva continuity and frequency converter units",
see pages 44-46

(73) Proprietor: **MUCSY, Endre**
**Erzsébet kiràlyné u. 2/c.**
**H-1146 Budapest (HU)**
(73) Proprietor: **HOOS, Kazmér**
**Rath György u. 22**
**H-1122 Budapest (HU)**

(72) Inventor: **MUCSY, Endre**
**Erzsébet kiràlyné u. 2/c.**
**H-1146 Budapest (HU)**
Inventor: **HOOS, Kazmér**
**Rath György u. 22**
**H-1122 Budapest (HU)**

(74) Representative: **Gold, Tibor Zoltán et al**
**T.Z.GOLD & COMPANY 9, Staple Inn**
**London WC1V 7QH (GB)**

Courier Press, Leamington Spa, England.

## Description

### Technical Field

The invention relates to a stand-by energy source, in particular to an electric supply source for the continuous or temporary substitution of energy shortfalls, even of only short duration, comprising one or more electric rotary machines, a flywheel and an auxiliary energy source, e.g. a heat engine.

In particular in recent years the number of the equipments, in which energy must be supplied absolutely continuously or with only an insignificant break, has rapidly increased, for example, the operating rooms and intensive care departments of hospitals, telephone exchanges, other equipments in telecommunications, control equipments of energy supplying systems, as well as in animal husbandry and poultry breeding in agriculture.

In accordance with the fields of application the demands are also of many aspects. Computing centres, e.g. do not allow even the slightest break, on the other hand, in agricultural plants only a drop-out of more than 10—20 minutes results in damage. In addition to the permissible duration of the power cut, with the equipments to be supplied the requirements regarding the single characteristics of current are also different.

### Background Art

To meet the different requirements, the most diverse solutions have been developed. Equipments with a higher demand are supplied with energy stored in an accumulator. In case of necessity the voltage is stabilized or transformed to the form needed. This solution is, however, too expensive, in particular, when a high output is required, and when a long-lasting power cut with an infrequent occurrence is to be substituted in such a manner. The costs of such equipment are further increased by the fact that continuous maintenance is imperative, and, in spite of the most careful maintenance, the accumulators deteriorate in a few years.

In cases of less strict requirements, when a drop-out in the supply from the mains occurs, an operator may put a Diesel engine motor of an auxiliary electrical source into operation and in such a manner energy supply may be restored within a few minutes. With this solution there is nevertheless a considerable break, the duration of which depends on the reliability and skill of the operator.

In the recent years equipments have been developed, wherein an electric motor supplied from the mains performs a steady rotary motion and simultaneously drives a flywheel. In case of a drop-out, the engine functions as a generator and supplies energy to the equipment which is separated from the mains, at the same time by the quick locking of a frictional clutch it is connected to the system, whereby a stand-by Diesel-engine is started up. According to the relevant publications the Diesel-engine reaches the nominal speed of rotation within a few hundredths of a second and takes over the drive of the generator from the flywheel. The disadvantage of this solution lies in that when locking the clutch, very high mechanical stresses arise, accordingly, the equipment endures such 'quick starts' to a limited extent only.

### Disclosure of Invention

The aim of the invention is to provide a stand-by energy source in which these drawbacks can be eliminated. At the same time, by retaining the advantageous features of known equipments, further advantages could be achieved.

According to the present invention, a stand-by energy source comprises the following elements, namely at least one electric rotary machine, a flywheel and an auxiliary energy source, e.g. a heat engine, characterised in that each of said elements is coupled to a respective element of a planetary gearing arrangement, which latter elements rotate around a common axis, and that there is a drive coupling providing an infinitely variable transmission coupling between two of said elements of the planetary gearing arrangement; and in that the elements of the planet gearing arangement comprise a carrier or cage element which carries one or more planet gears, a sun gear element and a ring gear element both of which engage the planet gear or gears.

According to a first preferred embodiment, the electric rotary machine is in normal operation supplied to act as a motor driving the flywheel via the planetary gearing arrangement, but in the event of failure or interruption of its supply voltage, serves as a generator driven by the auxiliary power source and/or the flywheel via the planetary gearing arrangement.

Alternatively, the electric rotary machine may in normal operation be supplied to act as a motor driving a load, but in the event of failure or interruption in the supply voltage to the electric rotary machine, the load is driven over the rotary machine by the flywheel and/or the auxiliary energy source via the planetary gearing arrangement.

The invention will be described in details by means of some preferred embodiments, by the way of example, with reference to the accompanying drawings, wherein:—

Figure 1 shows a schematic diagram of the fundamental layout of the stand-by energy source according to the invention but without the infinitely variable transmission which forms an essential part of the invention as claimed;

Figure 2 shows a schematic diagram of the fundamental layout of another preferred embodiment of the stand-by energy source according to the invention;

Figure 3 shows schematically a planetary gearing arrangement;

Figure 3a shows the correlations between the velocity vectors;

Figure 4 shows a further possible scheme of the planetary gearing arrangement;

Figure 4a shows the correlations between the velocity vectors;

Figure 5 illustrates the kinematic scheme of a preferred embodiment;

Figure 5a is the schematical diagram of the embodiment according to Figure 5;

Figure 5b illustrates the correlation between the velocity vectors;

Figure 6 is showing the front view of a further embodiment;

Figure 6a is the kinematic diagram of the embodiment according to Figure 6;

Figure 6b is the schematical diagram belonging to Figure 6;

Figure 6c is showing the correlations between the velocity vectors;

Figure 7 is showing the kinematic diagram of a preferred embodiment;

Figure 7a is the schematical diagram of the embodiment according to Figure 7;

Figure 7b illustrates the correlations between the velocity vectors;

Figure 8 is showing the front view of an improved embodiment;

Figure 8a is the kinematic diagram of the embodiment according to Figure 8;

Figure 8b is a schematical diagram;

Figure 8c is showing the correlations between the velocity vectors;

Figure 9 is showing the kinematic diagram of a preferred embodiment;

Figure 9a is a schematical diagram;

Figure 9b illustrates the correlations between the velocity vectors.

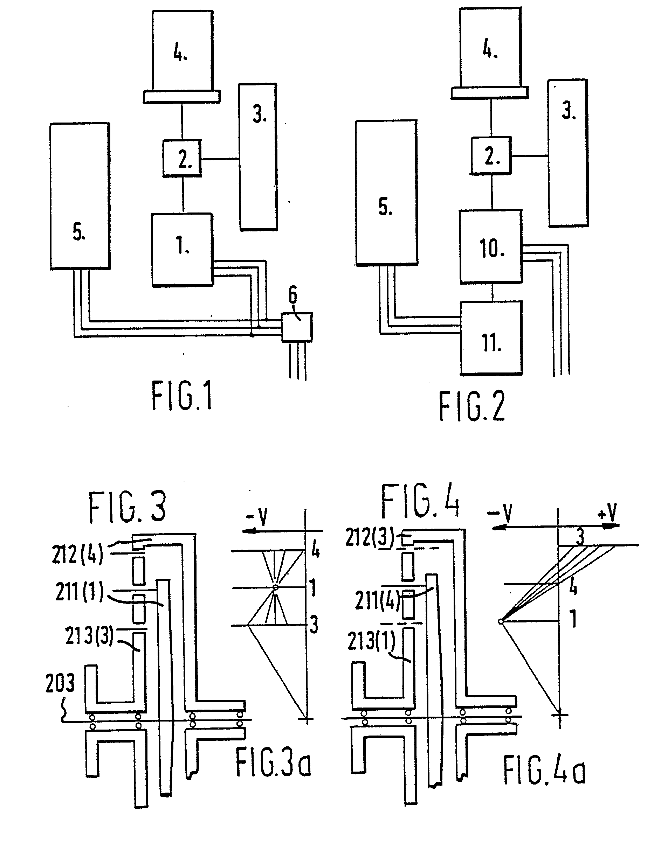

Referring to Figure 1, in this embodiment an electric rotary machine in the form of a motor 1 is connected to the mains, and performs a continuous rotary motion. By the intervention of a drive arrangement 2 it simultaneously drives a flywheel 3. An internal combustion engine 4 is connected to the same drive arrangement 2, such that whenever energy is supplied from the mains, the engine 4 is in a stationary state. The equipment 5 to be supplied is also connected to the mains. When supply from the mains is stopped, a clutch 6 opens, the motor 1 operates as a generator and supplies the equipment 5. Change-over involves voltage drops of a certain extent and duration, the values of which depend on the clutch 6 and on the speed of the control of excitation of the rotary machine 1.

If the equipment 5 does not allow the failure in energy supply resulting from change-over, two electric rotary machines are to be incorporated into the system in such a manner that co-rotation of their shafts could be achieved. Such an arrangement is shown in Figure 2 in which a rotary machine 10 in the form of a motor connected to the mains, and a rotary machine 11 in the form of a generator is provided. In this case the generator 11 supplies current to the equipment 5, so that when the auxiliary energy source is activated, interruptions cannot be observed.

When the supply from the mains drops out, the drive arrangement 2 drives the rotary machines 10 and 11. At the beginning the energy needed for this purpose is delivered by the flywheel 3, simultaneously with the deceleration of the flywheel 3 the internal combustion motor 4 is gradually accelerated and takes over the energy supply to an ever increasing extent.

In Figures 1 and 2 two fundamental solutions serving for the continuous current supply are presented. The generator 11 may be substituted by any other machine requiring mechanical driving output, e.g. a cooler-compressor, a dewatering pump, a mixer used in the chemical industry, etc.

Referring to Figures 3 and 4 let us examine the manner in which the drive arrangement 2 establishes the necessary co-operation between the three shafts connected to it. The drive arrangement 2 comprises a planetary gearing arrangement having an output branch and a drive branch with an infinitely variable transmission. For this solution a bi-variant planetary gearing arrangement is needed, that means that out of the three main elements — the carrier arm, the sun gear and the ring gear — two may rotate with an optional speed of rotation, while the speed of rotation of the third element develops in dependence on that of the other two.

In Figure 3 one known form of planetary arrangement is shown which can be advantageously used in the stand-by energy source according to the invention. The (carrier) arm 211 co-rotates with a shaft 203, the internal ring gear 212 and the external sun gear 213 — supported in bearings — are rotating about the same axis as the shaft. The planet pinion supported in bearings on the arm 211 is engaged with the teeth of these two central gears 212, 213.

In Figure 3a the peripheral velocity vectors of the three elements of the planetary gearing arrangement are illustrated in several modes of operation in which all the three elements are rotating counter-clockwise and with different peripheral velocities. From two known peripheral velocities the third one can be calculated, since the end-points of the three velocity vectors are always falling to one straight line.

From the Figure 3a it becomes apparent that when the arm 211 is rotating with a constant velocity, the peripheral velocity of the two central gears 212, 213 can be chosen within wide limits, in fact, one of them might be even at standstill which provides the fundamental basis of the invention. If the electric rotary machine 1 (Figure 1) or 10 (Figure 2) is connected to the arm 211 of the planetary gearing arrangement (Figure 3), and the flywheel 3 is connected to the sun gear 213 and the internal combustion engine 4 is connected to the ring gear 212, the two latter ones can be interchanged, it becomes possible to leave the internal combustion engine 4 in a stand-by state, i.e. it does not rotate, when the motor 1 or 10 (Figure 2) is driving the flywheel 3 via the planetary gearing arrangement.

In Figure 4 and in the associated vector-figure 4a another mode for the interconnection of the planetary gearing arrangement according to Figure 3 is shown in which the ring gear 212 is coupled to the flywheel 3, the arm 211 to the auxiliary energy source 4 and the sun gear 213 is coupled to the motor-generator 1 of the mains. Taking into consideration that in this case the sense of rotation of the ring gear 212 connected to the flywheel is opposite to the sense of rotation of the other two elements of the planetary gearing arrangement, the angular velocity — and as a consequence, the friction — will be high. The connection shown in Figures 3 and 3a are to be considered as more advantageous, and so with the further embodiments this type of connection will be applied.

In Figures 3 and 4, in addition to the reference number of the elements the symbols of the units to which they are connected, are also indicated in brackets. In Figures 3a and 4a the symbols of the same units are to be found beside the peripheral velocity vectors of the corresponding elements.

As we have already mentioned, the speed of rotation of two out of the three elements of the planetary gearing arrangement determines the speed of the third one. In the stand-by condition this connection can be established in very easy manner, in so far as the internal combustion engine is fixed with a brake. In this case the speed of rotation of the flywheel is proportional to the speed of rotation of the motor 1. The connection becomes more complicated when the central energy supply is stopped and the brake is released. In this case the generator 1 (or 11 in Figure 2) generates the electric energy needed, but for this purpose the generator has to be rotated. Initially, only the energy stored in the flywheel is available, as the internal combustion engine 4 is in a stationary state. When the flywheel is transmitting the energy, the speed of rotation decreases, accordingly, the constant speed or rotation of the generator can be ensured only by increasing the speed of rotation of the internal combustion engine, that means that the flywheel has to rotate, i.e. to accelerate the internal combustion engine in addition to the generator.

Above a certain speed of rotation the internal combustion engine is also transmitting an output, increasing approximately in proportion with the increase of the speed of rotation. However, realization becomes possible when two out of the three elements of the planetary gearing arrangement (i.e. the generator connected to them), the flywheel and the internal combustion engine are coupled with an output-transmitting connection with an infinitely variable transmission.

Three kinds of coupling are possible;

1. The flywheel is coupled with the internal combustion engine,

2. the flywheel is coupled to the generator,

3. the generator is coupled with the internal combustion engine.

Out of the three cases the second case differs essentially from the other two, since here an infinitely variable connection has been established between two elements, which are rotating even in the stand-by state, accordingly, for this purpose a drive with a slight possibility for modification, e.g. a variator with V-belts, suffices.

In cases (1) and (3), respectively, the internal combustion engine being in the stand-by state is to be accelerated to the desired speed of rotation in an infinitely variable manner, however, by using a variator with V-belts, acceleration in such a manner cannot be performed.

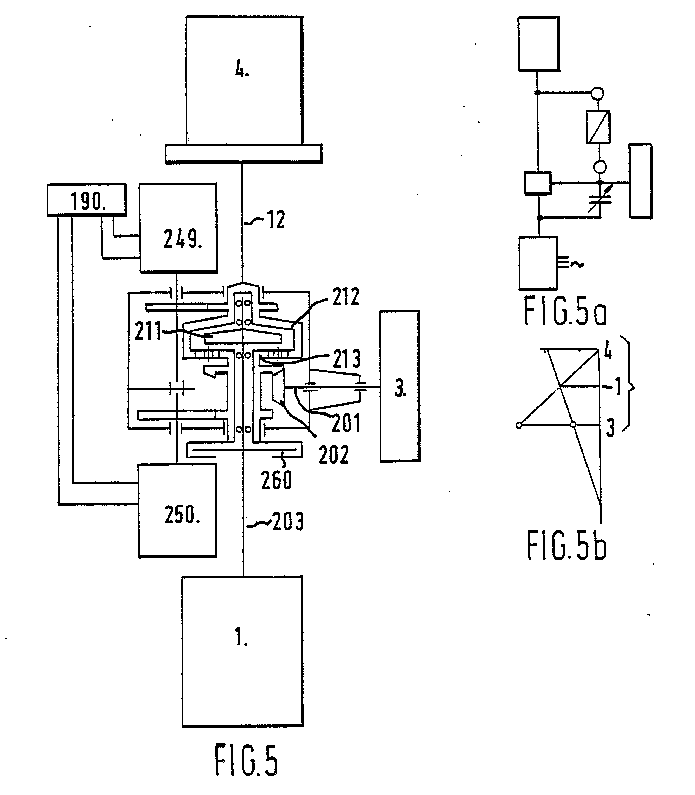

The essence of the embodiment shown in Figure 5 lies in that the three-phase motor-generator 1 is rotating with a constant character, with a speed of rotation being in compliance with the voltage and frequency of the mains. If it is a synchronous generator, by excitation, i.e. by the control thereof it can be well used for phase correction. Accordingly, in the stand-by state the motor-generator 1 and the flywheel 3 coupled with the shaft 201 are rotating. In this case the auxiliary energy source is represented by the internal combustion engine 4, but it may be any other power source, e.g. a gas turbine. The internal combustion engine 4 — being in a stand-by state, i.e. it does not rotate — is connected via its output shaft 12 to the ring gear 212 of the planetary gearing arrangement. The motor-generator 1 is connected via shaft 203 to the arm 211 of the planetary gearing arrangement, while the flywheel 3 is coupled with the sun gear 213 of the planetary gearing arrangement via a pair of bevel gears one of which 202 is wedged onto the shaft 201. Between the sun gear 213 and the ring gear 212 a drive containing hydrostatic rotary machines 249, 250 with a variable piston displacement are imposed, as a drive branch with an infinitely variable transmission ratio. In case of an equipment with a higher output the infinitely variable drive should be established with electric rotary machines. By this arrangement it becomes possible that in a stationary position of the internal combustion engine 4 the stand-by energy source should remain available in such a manner that the motor-generator 1, when working as a motor, should keep the flywheel in a 'charged' i.e. in a rotary state. In this situation the piston displacement of the rotary machine 250 is zero, while the rotary machine 249 is fixed by means of a control unit 190.

If the voltage of the mains drops out or ceases completely for any reason, the piston displacement of the rotary machine is increased gradually, whereby the shaft of the internal combustion engine 4 begins to rotate with a gradually increasing speed of rotation. After having reached the lowest permissible speed of rotation, the internal combustion engine is ignited and from that moment it takes part in the energy supply of the system. When the output of the internal combustion engine 4 reaches or exceeds the power demand under load of the motor-generator 1, the speed of rotation of the motor varies in accordance with the changed load, the power demand under the provisional conditions is satisfied by means of the flywheel, while the excess is fed thereinto. Between the arm 211 and the sun gear 213 of the planetary gearing arrangement there is arranged a frictional clutch 260. When the clutch is locked, the operation of the equipment is similar to that of a traditional motor-generator set driven by an internal combustion engine.

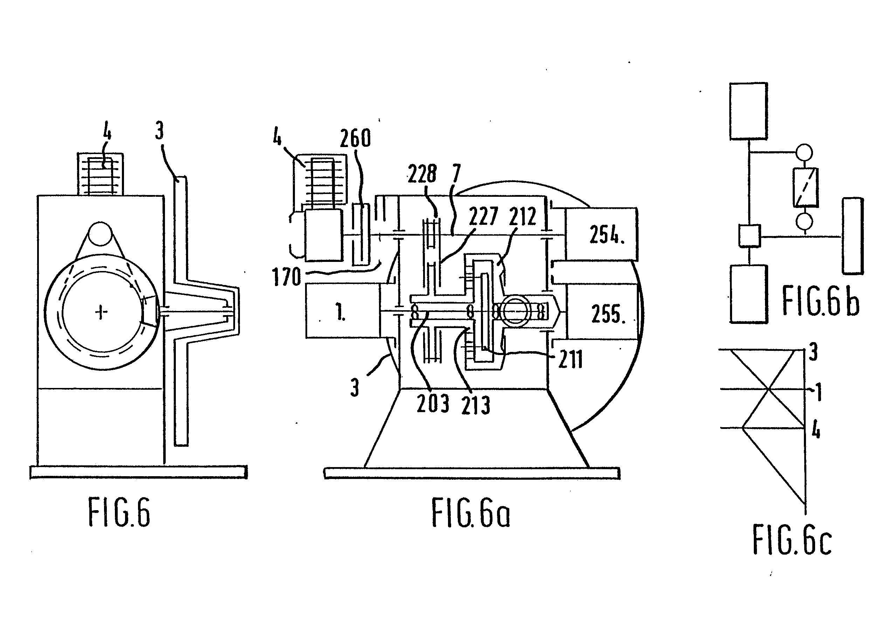

Referring to the embodiment shown in Figures 6, 6a and 6b, the aim set for this version has been to satisfy simultaneously the requirements relating to minimal maintenance, long useful life, small space requirement and easy accommodation.

The motor generator 1 supplied from the mains is arranged on the left end of the shaft 203. The ring gear 212 rotates around the shaft 203; an electric rotary machine 255 and the flywheel 3 (via the bevel gears) are coupled to the ring gear. The sun gear 213 — being supported in bearings on the shaft 203 is connected by means of a Gall's chain 227 to a sprocket wheel 228 wedged onto a shaft 7, as seen in the figure. On the right side an electric rotary machine 254 is connected to the shaft 7, while on the left side a disc brake 170, the frictional clutch 260 and the internal combustion motor 4 are arranged.

In order to be able to prolong the useful life of the equipment the components, which are continuously performing a rotary motion — even in the stand-by state — should rotate as slowly as possible. The speed of rotation of the motor-generator 1 supplied from the mains should not be more than 750 to 1000 rpm, in such a manner the speed of rotation of the rotary machine 255 will be also relatively low, e.g. about 1200—1500 rpm.

The electric rotary machines 254 and 255 can be D.C. machines, in this case it seems to be expedient to raise the brushes of the rotary machine when in the stand-by state. It is considered a preferred solution to apply A.C. machines without sliding surfaces and to insert a controlled reversing switch — a frequency changer — between said machines.

The peripheral velocities and the correlations between the speeds of rotation may be read out from Figure 6c on the right side. In a stand-by state the motor-generator 1 supplied from the mains is rotating, the brake 170 is locked and the clutch 260 is released. The rotary machine 254 is at standstill, the rotary machine 255 is rotating in an unloaded state, the flywheel 3 is also rotating.

When the energy supply from the mains drops out, by changing the excitation the motor 1 is transformed into a generator and by utilizing the current generated by the rotary machine 255, it starts the rotary machine 254. The flywheel 3 is slowing down and transmits the energy; by the acceleration of the rotary machine 254 the generator can be kept on a constant speed of rotation.

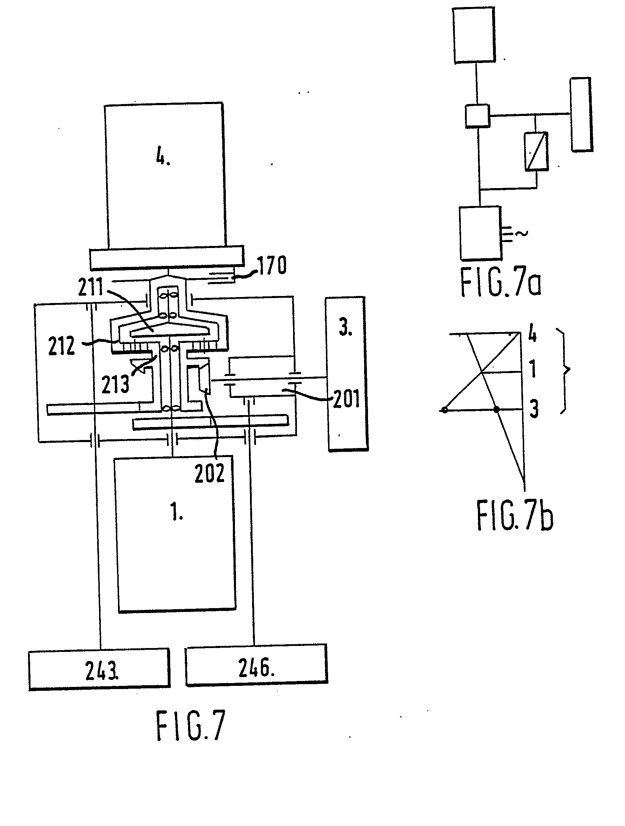

Now, referring to Figure 7, here a stand-by energy source which is essentially similar to the embodiment according to Figure 5 is shown. The difference lies in that in the infinitely variable drive branch 213 of the planetary gearing arrangement with the output branch 211, a variator 243, 246 with V-belts is used. The output to be gained by means of the equipment is restricted to about 10—30 kW by the dimension of the V-belt.

Since by means of the variator with V-belts transmission in such a form that one pulley is at standstill while the other rotates cannot be realized, an essential difference lies in that with this embodiment the variator provided with the V-belts establishes a driving connection with an infinitely variable transmission between the arm 211 and the sun gear 213 of the planetary gearing arrangement. Accordingly, with the embodiment illustrated in Figure 7, the internal combustion engine 4, which is used as an auxiliary energy source, can be stopped, however, it is preferred to promote braking by using an accessory frictional brake 170, i.e. to ensure the stationary state thereof, because in such a manner it becomes possible to loosen temporarily the V-belts.

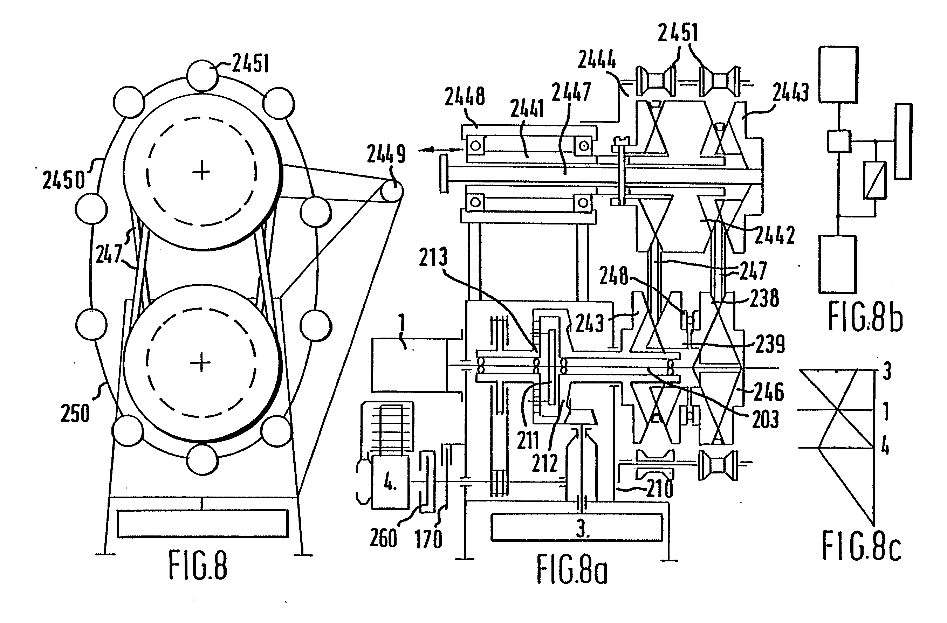

In Figure 8, 8a and 8b an embodiment is shown, where the resilient drive-transmitting element of the variator, the endless driving belt can be stopped in the stand-by state, thus prolonging the useful life. With this embodiment the flywheel 3 is engaged with the ring gear 212 of the planetary gearing arrangement, while the auxiliary energy source — in the present case an internal combustion engine 4 — is connected to the sun gear 213 of the planetary gearing arrangement by interposing the releasable safety clutch 260 and the frictional brake 170. Between the ring gear 212 and the arm 211 a variator provided with two V-belts 247 connected in series, with an infinitely variable transmission, is inserted.

In order to be able to stop the drive belt, the outer half-discs 243, 246 of the V-belt pulleys arranged on the geometric axis of the planetary gearing arrangement are wedged on a tubular shaft 203 co-rotating with the ring gear 212 and onto the shaft of the arm 211; the inner half-discs 238 and 239 are supported in bearings and are co-rotating with said shafts but can be axially displaced thereon and inbetween a thrust bearing 248 is arranged. The inner half-discs 2442 of the other two V-belt pulleys are wedged onto a tubular countershaft 2441, while the outer half-discs 2443 and 2444 are fixed to an axially displaceable bar 2447 arranged within a tubular countershaft 2441. The distance of the bearing block 2448 of said tubular countershaft 2441 in relation to the geometric axis of the planetary gearing arrangement can be changed by turning the block 2448 around a hinging point 2449. The V-belts 247 are enclosed by metal sheeting 2450 consisting of two halves; the sheeting comprises freely rotating guide elements 2451 and one half thereof is fastened to a housing 210 of the planetary gearing arrangement, while the other half is fixed to the bearing block 2448 of the tubular countershaft 2441.

The variator with the two V-belts 247 connected in series can be modified by the axial displacement of the bar 2447. In the position of the variator shown in Figure 8 the bar 2447, as well as the discs 2443, 2444 and the half-discs 238, 239 are in their right-hand end position. As a consequence, the sun gear 213 and the connected auxiliary energy source 4 are at standstill. The tightness of the V-belts 247 can be changed by turning the bearing block 2448 around the hinging point 2449. In the stand-by state, after having locked the brake 170 the bearing block 2448 is approximating the shaft 203 of the planetary gear arrangement to such an extent that the V-belts 247 should leave the frictional surface of the pulleys and bearing up against the guide elements 2451 of the metal sheeting 2450, they should gradually stop. In such a manner their useful life can be considerably prolonged.

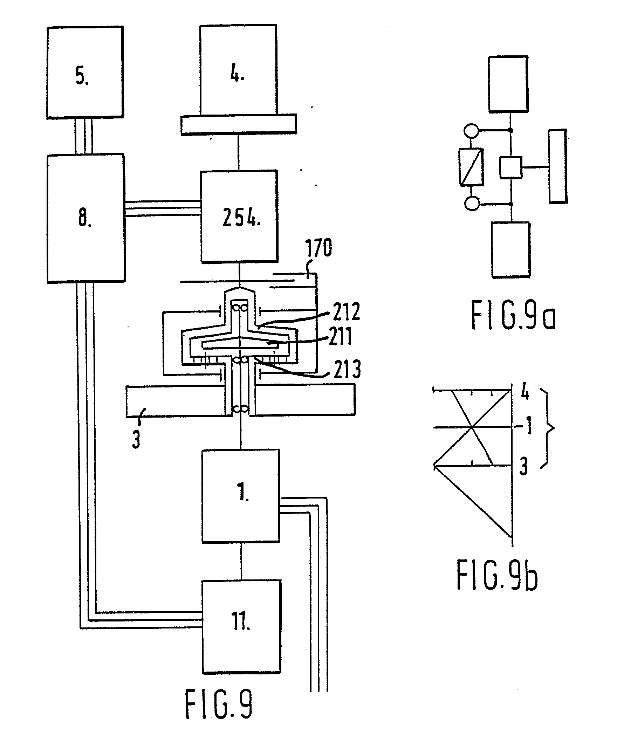

In the embodiment shown in Figure 9 the flywheel 3 is coupled to the sun gear 213 of the planetary gearing arrangement, while the internal combustion engine 4 is connected via the electric rotary machine 254 to the ring gear 212. The machine 11 requiring continuous drive, the electric rotary machine 254, as well as the consumer requiring uninterrupted energy supply, are electrically interconnected by means of a switching — controlling and regulating unit 8. The ring gear 212 is coupled to the frictional brake 170.

From Figures 9 and 9a it will be seen that this embodiment realizes the schematical arrangement according to Figure 2, in contrast to the previously described examples, in which the schematical arrangement according to Figure 1 has been realized.

The advantage of the embodiment according to the Figure 9 lies in that the structural layout is simple, the drive branch with the infinitely variable transmission is realized by means of the electric rotary machines 11 and 254, which are supplying also the consumer 5 with current via the switching-controlling and regulating unit 8.

## Claims

1. A stand-by energy source comprising the following elements, namely at least one electric rotary machine (1), a flywheel (3) and an auxiliary energy source (4), e.g. a heat engine, characterised in that each of said elements (1; 3; 4) is coupled to a respective element (211; 212; 213) of a planetary gearing arrangement, which latter elements rotate around a common axis (203); in that there is a drive coupling providing an infinitely variable transmission coupling between two of said elements of the planetary gearing arrangement; and in that the elements of the planetary gearing arrangement comprise a carrier or cage element which carries one or more planet gears, a sun gear element (213) and a ring gear element (212) both of which engage the planet gear or gears.

2. A stand-by energy source as claimed in claim 1, characterised in that the electric rotary machine (1) is in normal operation supplied to act as a motor driving the flywheel (3) via the planetary gearing arrangement, but in the event of failure or interruption of its supply voltage, serves as a generator driven by the auxiliary gearing arrangement (Figure 3).

3. A stand-by energy source as claimed in claim 1, characterised in that the electric rotary machine (1) in normal operation is supplied to act as a motor driving a load, but in the event of failure or interruption in the supply voltage to the electric rotary machine (1), the load is driven over the rotary machine by the flywheel (3) and/or the auxiliary energy source (4) via the planetary gearing arrangement.

4. A stand-by energy source as claimed in any of claims 1 to 3, characterised in that the electric rotary machine (1) is coupled to the cage or carrier gear element (211) of the planetary gearing arrangement (Figure 3).

5. A stand-by energy source as claimed in any one of claims 1 to 4, characterised in that the flywheel (3) is coupled to the sun gear element (213) of the planetary gearing arrangement, the auxiliary energy source (4) is coupled to the ring gear element (212) of the planetary gearing arrangement and said drive coupling is connected between the sun gear element and the ring gear element and is provided by hydrostatic rotary machines (249, 250) with a variable piston displacement hydraulically connected via control unit (190), and between the cage element (211) and the sun gear element (213) a frictional clutch (260) is provided (Figure 5).

6. A stand-by energy source as claimed in any one of claims 1 to 4, characterised in that the flywheel (3) is coupled to the ring gear element (212) of the planetary gearing arrangement, the auxiliary energy source (4) is coupled to the sun gear element (213) of the planetary gearing arrangement, and in that the drive coupling is provided between the sun gear element (213) and the ring gear element (212) by electrical rotary machines (254, 255) and associated switching and controlling means, the sun gear element (213) being connected directly or indirectly to a brake (170) (Figure 6).

7. A stand-by energy source as claimed in any one of claims 1 to 4, characterised in that the flywheel (3) is coupled to the sun gear element (213) of the planetary gearing arrangement, the auxiliary energy source (4) is coupled to the ring gear element (212) of the planetary gearing arrangement; in that the drive coupling is provided between the sun gear element (213) and the cage element (211) of the planetary gearing arrangement by a variator with V-belts; and in that the ring gear element (212) is provided with a frictional brake (170) (Figure 7).

8. A stand-by energy source as claimed in any one of claims 1 to 4, characterised in that the flywheel (3) is coupled to the ring gear element (212) of the planetary gearing arrangement, the auxiliary energy source (4) is coupled to the sun gear element (213) of the planetary gearing arrangement via a releasable safety clutch (260) and a frictional brake (170), and the drive coupling is provided between the ring gear element (212) and the cage element (211) by a variator with V-belts, provided with two V-belts (247) connected in series (Figure 8).

9. A stand-by energy source as claimed in claim 8, characterised in that the outer half-discs (243, 246) of those V-belt pulleys which are arrangement on the geometric axis of the planetary gearing arrangement are fixed onto a tubular shaft (203) co-rotating with the ring gear and onto the shaft of the cage gear element (211) respectively while the inner half-discs (238, 239) are supported in bearings so as to co-rotate with said axis but are displaceable in an axial direction, and between the inner half-discs (238, 239) a thrust bearing (248) is arranged; in that the inner half-discs (2442) of the other two V-belt pulleys are fixed onto a tubular countershaft (2441), the outer half-discs (2443, 2444) are fixed onto an axially displaceable bar (2447) located within the tubular countershaft (2441); and in that the distance between the tubular countershaft (2441) and the geometric axis of the planetary gearing arrangement can be changed by rotating the position of the countershaft (2441) about a hinging point (2449), and the V-belts (247) are enclosed by a metal sheeting in two halves containing freely rotating guide elements (2451) one half thereof being fastened to the housing (210) of the planetary gearing arrangement, while the other half is fixed to a bearing block (2448) for the tubular countershaft (2441) (Figure 8).

10. A stand-by energy source as claimed in claim 3, characterised in that the flywheel (3) is coupled to the sun gear element (213), the auxiliary energy source (4) is coupled to the ring gear element (212) which in turn is coupled to a frictional brake (170), and the electric rotary machine (1) is coupled to the cage gear element (211) of the planetary gearing arrangement, the auxiliary energy source (4) being coupled to the ring gear element (212) via a second rotary electrical machine (254) in the form of a generator, and the first said rotary electrical machine (1) being coupled to the load, which is a third rotary electrical machine (11) also in the form of a generator; and in that the second and third rotary electrical machines (1, 11) are each connected in use to supply energy to a second load (5) via a control unit (8).

**Patentansprüche**

1. Bereitschaftsenergiequelle mit wenigstens einer elektrischen, rotierenden Maschine (1), einem Schwungrad (3) und einer Hilfskraftmaschine (4), beispielsweise einer Wärmekraftmaschine, dadurch gekennzeichnet, daß jedes der vorgenannten Teile (1, 3, 4) mit einem entsprechenden Teil (211, 212, 213) eines Planetengetriebes verbunden ist, wobei die Planetengetriebeteile um eine gemeinsame Achse (203) rotieren, daß eine Antriebskupplung mit einer stufenlos regelbaren Übersetzung zwischen zwei der Teile des Planetengetriebes vorgesehen ist, und daß die Teile des Planetengetriebes einen Planetenträger, der ein Planetenrad oder mehrere Planetenräder trägt, ein Sonnenrad (213) und ein Hohlrad (212) enthalten, die beide mit dem Planetenrad beziehungsweise den Planetenrädern in Eingriff stehen.

2. Bereitschaftsenergiequelle nach Anspruch 1, dadurch gekennzeichnet, daß die elektrische, rotierende Maschine (1) im Normalbetrieb als ein das Schwungrad (3) über das Planetengetriebe antreibender Motor ausgelegt ist, der bei einem Zusammenbrechen oder einer Unterbrechung seiner Speisespannung als ein von der Hilfskraftmaschine angetriebener Generator dient (Fig. 3).

3. Bereitschaftsenergiequelle nach Anspruch 1, dadurch gekennzeichnet, daß die elektrische, rotierende Maschine (1) im Normalbetrieb als ein einen Verbraucher antreibender Motor ausgelegt ist, daß jedoch bei einem Zusammenbrechen oder einer Unterbrechung der Speisespannung der elektrischen, rotierenden Maschine (1) der Verbraucher über die rotierende Maschine von dem Schwungrad (3) und/oder von der Hilfskraftmaschine (4) über das des Planetengetriebe angetrieben wird.

4. Bereitschaftsenergiequelle nach einem der Ansprüche 1 bis 3, dadurch gekennzeichnet, daß die elektrische, rotierende Maschine (1) mit dem Planetenträger (211) des Planetengetriebes verbunden ist (Fig. 3).

5. Bereitschaftsenergiequelle nach einem der Ansprüche 1 bis 4, dadurch gekennzeichnet, daß das Schwungrad (3) mit dem Sonnenrad (213) des Planetengetriebes verbunden ist, daß die Hilfskraftmaschine (4) mit dem Hohlrad (212) des Planetengetriebes gekuppelt ist und daß die Antriebskupplung zwischen dem Sonnenrad und dem Hohlrad eingeschaltet ist und von hydrostatischen rotierenden Maschinen (249, 250) mit veränderlichem Hubvolumen gebildet ist, die über ein Steuerventil (190) miteinander hydraulisch verbunden sind, und daß zwischen dem Planetenträger (211) und dem Sonnenrad (213) eine Reibungskupplung (260) angeordnet ist (Fig. 5).

6. Bereitschaftsenergiequelle nach einem der Ansprüche 1 bis 4, dadurch gekennzeichnet, daß das Schwungrad (3) mit dem Hohlrad (212) des Planetengetriebes verbunden ist, daß die Hilfskraftmaschine (4) mit dem Sonnenrad (213) des Planetengetriebes gekuppelt ist, und daß die Antriebskupplung zwischen dem Sonnenrad (213) und dem Hohlrad (212) von elektrischen, rotierenden Maschinen (254, 255) und zugeordneten Schalt- und Steuereinrichtungen gebildet ist, wobei das Sonnenrad (213) direkt oder indirekt mit einer Reibungsbremse (170) verbunden ist (Fig. 6).

7. Bereitschaftsenergiequelle nach einem der Ansprüche 1 bis 4, dadurch gekennzeichnet, daß das Schwungrad (3) mit dem Sonnenrad (213) des Planetengetriebes verbunden ist, daß die Hilfskraftmaschine (4) mit dem Hohlrad (212) des Planetengetriebes gekuppelt ist, daß die Antriebskupplung zwischen dem Sonnenrad (213) und dem Planetenträger (211) des Planetengetriebes von einem mit Keilriemen versehenen Variator gebildet ist, und daß das Hohlrad (212) mit einer Reibungsbremse (170) versehen ist (Fig. 7).

8. Bereitschaftsenergiequelle nach einem der Ansprüche 1 bis 4, dadurch gekennzeichnet, daß das Schwungrad (3) mit dem Hohlrad (212) des Planetengetriebes verbunden ist, daß die Hilfskraftmaschine (4) mit dem Sonnenrad (213) des Planetengetriebes über eine lösbare Reibungskupplung (260) und eine Reibungsbremse (170) gekuppelt ist, und daß die Antriebskupplung zwischen dem Hohlrad (212) und dem Planetenträger (211) als ein mit Keilriemen versehener Variator ausgebildet ist, der zwei in Reihe geschaltete Keilriemen (247) aufweist (Fig. 8).

9. Bereitschaftsenergiequelle nach Anspruch 8, dadurch gekennzeichnet, daß die äußeren Halb-scheiben (243, 246) diejenigen Keilriemen-scheiben, die auf der geometrischen Achse des Planetengetriebes angeordnet sind, auf einer Hohlwelle (203) befestigt sind, die mit dem Hohlrad beziehungsweise der Welle des Planetenträgers (211) zusammen umlaufen, wohingegen die inneren Halbscheiben (238, 239) derart in Lagern gelagert sind, daß sie mit der Achse, aber in axialer Richtung verschiebbar, umlaufen, und zwischen den inneren Halbscheiben (238, 239) ein Axiallager (248) angeordnet ist, daß die inneren Halbscheiben (2442) der anderen beiden Keilriemenscheiben auf einer Gegenhohlwelle (2441) befestigt und die äußeren Halbscheiben (2443, 2444) auf einer axial verschiebbaren Stange (2447) befestigt sind, die in der Gegenhohlwelle (2441) angeordnet ist, und daß der Abstand zwischen der Gegenhohlwelle (2441) und der geometrischen Achse des Planetengetriebes durch Verdrehen der Lage der Gegenhohlwelle (2441) um einen Anlenkpunkt (2449) veränderbar ist, und die Keilriemen (247) von einer zweiteiligen Metallhülle umgeben sind, die frei drehende Führungselemente (2451) aufweist, von denen die eine Hälfte an dem Gehäuse (210) des Planetengetriebes befestigt ist, wohingegen die andere Hälfte an einem Lagerblock (2448) für die Gegenhohlwelle (2441) befestigt ist (Fig. 8).

10. Bereitschaftsenergiequelle nach Anspruch 3, dadurch gekennzeichnet, daß das Schwungrad (3) mit dem Sonnenrad (213) gekuppelt ist, daß die Hilfskraftmaschine (4) mit dem Hohlrad (212) verbunden ist, welches seinerseits mit einer Reibungsbremse (170) verbunden ist, und daß die elektrische rotierende Maschine (1) mit dem Planetenträger (211) des Planetengetriebes gekuppelt ist, wobei die Hilfskraftmaschine (4) mit dem Hohlrad (212) über eine zweite, rotierende elektrische Maschine (254) in Form eines Generators verbunden ist, und die erste, elektrische rotierende Maschine (1) mit einer dritten elektrischen rotierenden Maschine (11) ebenfalls in Form eines Generators gekuppelt ist, und daß die zweiten und dritten elektrischen, rotierenden Maschinen (1, 11) jeweils derart miteinander verbunden sind, daß über eine Steuereinheit (8) einem zweiten Verbraucher (5) Energie zugeführt wird.

## Revendications

1. Source d'énergie de secours comprenant les organes suivants, à savoir au moins une machine tournante électrique (1), un volant (3) et une source d'énergie auxiliaire (4), par exemple un moteur thermique, caractérisée en ce que chacun desdits organes (1; 3; 4) est accouplé à un élément respectif (211; 212; 213) d'un engrenage épicycloïdal, ces derniers éléments tournant autour d'un axe commun (203); en ce qu'il est prévu une liaison d'entraînement établissant une transmission infiniment variable entre deux desdits éléments de l'engrenage épicycloïdal; et en ce que les éléments de l'engrenage épicycloïdal comprennent un élément de support ou en forme de cage qui porte un ou plusieurs pignons satellites ainsi qu'un pignon planétaire (213) et une couronne dentée (212) qui viennent tous deux s'engrener avec le ou les pignon(s) satellite(s).

2. Source d'énergie de secours telle que définie dans la revendication 1, caractérisée en ce que la machine tournante électrique (1) est, en service normal, alimentée pour fonctionner comme un moteur entraînant le volant (3) par l'intermédiaire de l'engrenage épicycloïdal mais, dans le cas d'une défaillance ou d'une coupure de sa tension d'alimentation, elle agit comme une génératrice entraînée par l'engrenage auxiliaire (Figure 3).

3. Source d'énergie de secours telle que définie dans la revendication 1, caractérisée en ce que la machine tournante électrique (1) est, en service normal, alimentée pour fonctionner comme un moteur entraînant une charge, mais dans le cas d'une défaillance ou d'une coupure de la tension d'alimentation de la machine tournante électrique (1), la charge est entraînée, en plus de la machine tournante, par le volant (3) et/ou par la source d'énergie auxiliaire (4) par l'intermédiaire de l'engrenage épicycloïdal.

4. Source d'énergie de secours, telle que définie dans l'une quelconque des revendications 1 à 3, caractérisée en ce que la machine tournante électrique (1) est accouplée à l'élément de support ou en forme de cage (211) de l'engrenage épicycloïdal (Figure 3).

5. Source d'énergie de secours, telle que définie dans l'une quelconque des revendications 1 à 4, caractérisée en ce que le volant (3) est accouplé au pignon planétaire (213) de l'engrenage épicycloïdal, la source d'énergie auxiliaire (4) est accouplée à la couronne dentée (212) de l'engrenage épicycloïdal et ladite liaison d'entraînement est raccordée entre le pignon planétaire et la couronne dentée et est réalisée par des machines tournantes hydrostatiques (249, 250) à course de piston variable, reliées hydrauliquement par une unité de commande (190), un embrayage à friction (260) étant prévu entre l'élément en forme de cage (211) et le pignon planétaire (213) (Figure 5).

6. Source d'énergie de secours telle que définie dans l'une quelconque des revendications 1 à 4, caractérisée en ce que le volant (3) est accouplé à la couronne dentée (212) de l'engrenage épicycloïdal, la source d'énergie auxiliaire (4) est accouplée au pignon planétaire (213) de l'engrenage épicycloïdal, et en ce que ladite liaison d'entraînement est réalisée entre le pignon planétaire (213) et la couronne dentée (212) par des machines tournantes électriques (254, 255) et des organes de commutation et de commande associés, le pignon planétaire (213) étant relié directement ou indirectement à un frein (170) (Figure 6).

7. Source d'énergie de secours, telle que définie dans l'une quelconque des revendications 1 à 4, caractérisée en ce que le volant (3) est accouplé au pignon planétaire (213) de l'engrenage épicycloïdal, la source d'énergie auxiliaire (4) est accouplée à la couronne dentée (212) de l'engrenage épicycloïdal; en ce que la liaison d'entraînement est réalisée entre le pignon planétaire (213) et l'élément en forme de cage (211) de l'engrenage épicycloïdal par un variateur à courroies en V; et en ce que la couronne dentée (212) est pourvue d'un frein à friction (170) (Figure 7).

8. Source d'énergie de secours, telle que définie dans l'une quelconque des revendications 1 à 4, caractérisée en ce que le volant (3) est accouplé à la couronne dentée (212) de l'engrenage épicycloïdal, la source d'énergie auxiliaire (4) est accouplée au pignon planétaire (213) de l'engrenage épicycloïdal, par l'intermédiaire d'un embrayage de sécurité libérable (260) et d'un frein à friction (170), et la liaison d'entraînement est réalisée entre la couronne dentée (212) et l'élément en forme de cage (211), par un variateur à courroies en V, comportant deux courroies en V (247) reliées en série (Figure 8).

9. Source d'énergie de secours telle que définie dans la revendication 8, caractérisée en ce que les demi-disques extérieurs (243, 246) de celles des poulies des courroies en V, qui sont disposées sur l'axe géométrique de l'engrenage épicycloïdal, sont calés respectivement sur un arbre tubulaire (203) tournant conjointement avec la couronne dentée et sur l'arbre de l'élément d'engrenage en forme de cage (211), tandis que les demi-disques intérieurs (238, 239) sont supportés dans des paliers de façon à tourner conjointement avec ledit axe mais sont déplaçables dans une direction axiale et, entre les demi-disques intérieurs (238, 239), est monté un palier de butée (248); en ce que les demi-disques intérieurs (2442) des deux autres poulies des courroies en V, sont calés sur un contre-arbre tubulaire (2441), les demi-disques extérieurs (2443, 2444) sont calés sur une tige (2447) déplaçable axialement et logée à l'intérieur du contre-arbre tubulaire (2441); et en ce que la distance entre le contre-arbre tubulaire (2441) et l'axe géométrique de l'engrenage épicycloïdal peut être modifiée par une rotation angulaire du contre-arbre (2441) autour d'un point d'articulation (2449), et les courroies en V (247) sont enfermées dans une enveloppe métallique en deux moitiés renfermant des éléments de guidage (2451) libres en rotation, une moitié de ceux-ci étant assujettie au carter (210) de l'engrenage épicycloïdal, tandis que l'autre moitié est fixée à un bloc-palier (2448) recevant le contre-arbre tubulaire (2441) (Figure 8).

10. Source d'énergie de secours telle que définie dans la revendication 3, caractérisée en ce que le volant (3) est accouplé au pignon planétaire (213), la source d'énergie auxiliaire (4) est accouplée à la couronne dentée (212) qui, de son côté, est accouplée à un frein à friction (170), et la machine tournante électrique (1) est accouplée à l'élément d'engrenage en forme de cage (211) de l'engrenage épicycloïdal, la source d'énergie auxiliaire (4) étant accouplée à la couronne dentée (212) par l'intermédiaire d'une deuxième machine tournante électrique (254) constituée par une génératrice, et ladite première machine tournante électrique (1) étant accouplée à une troisième machine tournante électrique (11), également constituée par une génératrice; et en ce que la deuxième et la troisième machines tournantes électriques (1, 11) sont reliées l'une à l'autre en service pour fournir de l'énergie à une seconde charge (5), par l'intermédiaire d'une unité de commande (8).

FIG.1

FIG.2

FIG.3

FIG.3a

FIG.4

FIG.4a

FIG.5

FIG.5a

FIG.5b

FIG.6

FIG.6a

FIG.6b

FIG.6c

0 058 720

FIG.7a

FIG.7b

FIG.7

FIG.8b

FIG.8c

FIG.8a

FIG.8

FIG.9

FIG.9a

FIG.9b